(19) **Europäisches Patentamt**

**European Patent Office**

**Office européen des brevets**

(11) **EP 4 629 600 A1**

(12) # EUROPEAN PATENT APPLICATION

(43) Date of publication:
**08.10.2025 Bulletin 2025/41**

(21) Application number: **25159876.9**

(22) Date of filing: **25.02.2025**

(51) International Patent Classification (IPC):
**H04L 67/12** (2022.01)      **G08G 1/16** (2006.01)
**H04W 4/46** (2018.01)

(52) Cooperative Patent Classification (CPC):
**H04L 67/12; G08G 1/096791; G08G 1/162;**
**G08G 1/166; H04W 4/027; H04W 4/46**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **05.04.2024 IN 202441028197**

(71) Applicant: **Harman International Industries, Inc.**
**Stamford, Connecticut 06901 (US)**

(72) Inventors:
• **KRISHNAPPANAVAR, Basavaraj**
  **Bengaluru (IN)**
• **REDDY, Sridhar Vellenki**
  **560024 Bangalore (IN)**
• **JAIN, Rishu**
  **560063 Bangalore (IN)**
• **ADDEPALLIBALARAJU, Hareesh Kumar Raju**
  **516268 Andhra Pradesh (IN)**
• **BABU, Arepalli Ramesh**
  **521158 Andhra Pradesh (IN)**

(74) Representative: **Kraus & Lederer PartGmbB**
**Thomas-Wimmer-Ring 15**
**80539 München (DE)**

(54) **METHODS AND SYSTEMS FOR DYNAMIC TARGET CLASSIFICATION**

(57)    Systems and methods are herein provided for dynamic target classification. In one example, a method for a vehicle computing system of a host vehicle (HV), comprises receiving one or more messages from one or more remote vehicles (RVs) via Vehicle-to-Everything (V2X) communication, wherein each of the one or more messages comprise one or more RV parameters; determining one or more HV parameters; performing target classification based on the one or more HV parameters and the one or more RV parameters of each of the one or more RVs to identify a subset of the one or more messages; transmitting the subset of the one or more messages to an application of the vehicle computing system for processing.

FIG. 5

EP 4 629 600 A1

**Description**

TECHNICAL FIELD

Embodiments of the subject matter disclosed herein relate to vehicle communications, and more specifically, to systems and methods for dynamic target classification.

BACKGROUND

In a vehicle-to-everything (V2X) environment, including a vehicle-to-vehicle (V2V) or vehicle-to-infrastructure (V2I) system, various nodes broadcast a number of messages at regular intervals. These nodes can be vehicle that transmit messages providing locations, time, speeds, and other vehicle-related information. The nodes may also be infrastructure equipment such as roadside signage, traffic codes, traffic lights, etc., that provide necessary information to help understand the situation around the vehicles.

In some circumstances, upon receiving messages from other nodes including remote vehicles (RVs), a host vehicle (HV) may process the messages to determine a time-to-collision (TTC) status between itself and other RVs, or perform other operations for situational awareness. Usually, the HV processes all the incoming messages periodically, which results in a high demand for the HV's processing power as the processing power is proportional to the number of nodes and the number of messages received from the nodes. Therefore, the HVs message handling can be burdensome or even problematic in a dense environment involving many vehicles. To address this, target classification methods are employed by the processing system of the HV to provide fewer targets to a secondary application so that irrelevant data is filtered out and not processed. However, target classification zones are typically a fixed shape and/or size, and thus filter varying proportions of targets depending on speed of the HV and RVs and various other circumstances. As such, in some cases, relevant messages may be filtered out and in other cases, irrelevant messages may not be filtered out, thus increasing demands of the HVs processor.

BRIEF DESCRIPTION

In one example, a method for a vehicle computing system of a host vehicle (HV), comprises receiving one or more messages from one or more remote vehicles (RVs) via Vehicle-to-Everything (V2X) communication, wherein each of the one or more messages comprise one or more RV parameters; determining one or more HV parameters; performing target classification based on the one or more HV parameters and the one or more RV parameters of each of the one or more RVs to identify a subset of the one or more messages; transmitting the subset of the one or more messages to an application of the vehicle computing system for processing.

The one or more RV parameters may include RV speed, RV location, route, and others. Similarly, the one or more HV parameters may include HV speed, HV location, intended route, and others. In some examples, one or more environmental parameters, including road geometry, may be determined as well. Based on the RV parameters, HV parameters, a relative speed between the HV and each of the one or more RVs may be determined. Based on the relative speed, the environmental parameters, RV and HV parameters, and a Time-to-Collision, a target zone for target classification may be determined.

By generating performing target classification based on a dynamic target zone that is generated based on specific parameters of the HV, RVs, and in some cases, road geometry, irrelevant BSM data may be filtered out, thereby reducing processing power of the HV computing system. Further, using road geometry and/or intended route when generating the dynamic target zone may increase inclusion of relevant targets that would otherwise be erroneously filtered out using a fixed target zone.

It should be understood that the brief description above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

BRIEF DESCRIPTION OF THE DRAWINGS

The disclosure may be better understood from reading the following description of non-limiting embodiments, with reference to the attached drawings, wherein below:

FIG. 1 shows a block diagram of an example V2X ecosystem, in accordance with one or more embodiments of the present disclosure;

FIG. 2 shows an example partial view of a vehicle cabin including an instrument panel, in accordance with one or more embodiments of the present disclosure;

FIG. 3 shows a block diagram of an example in-vehicle computing system of a vehicle configured to receive and generate V2X messages, in accordance with one or more embodiments of the present disclosure;

FIG. 4 shows a block diagram of an example basic safety message, in accordance with one or more embodiments of the present disclosure;

FIG. 5 shows a flowchart illustrating a method for filtering received BSMs, in accordance with one or more embodiments of the present disclosure;

FIG. 6 shows a flowchart illustrating a method for dynamic target classification, in accordance with one or more embodiments of the present disclosure;

FIG. 7 shows a flowchart illustrating a method for generating a dynamic target zone, in accordance with one or more embodiments of the present disclosure;

FIG. 8 shows an example V2X communication scenario, in accordance with one or more embodiments of the present disclosure;

FIG. 9 shows a prior art example of a target zone of a host vehicle during travel;

FIG. 10 shows an example of a dynamic target zone of a host vehicle during travel, in accordance with one or more embodiments of the present disclosure.

FIG. 11A shows a prior art example of a fixed target zone used for target classification in a scenario; and

FIG. 11B shows an example of a dynamic target zone used for dynamic target classification in the scenario.

## DETAILED DESCRIPTION

The following description relates to systems and methods for Vehicle-to-Everything (V2X) communication, and in particular to systems and methods for dynamic target classification for filtering of received V2X messages. V2X communication is the process of broadcasting messages between a vehicle and any V2X device that may affect or communicate with the vehicle. V2X communication also includes receiving messages at a vehicle (e.g., a host vehicle) from another vehicle (e.g., a remote vehicle) or from other entities such as roadside infrastructure, personal devices, and the like. V2X communication allows for communication between the vehicle and other entities that may increase utilization of infrastructure, transmission of safety information between vehicles traveling near each other, communication with pedestrians walking, and more. V2X applications that are supported by a vehicle (e.g., a V2X communication system) may provide a driver of the vehicle with one or more notifications in response to determination of potential safety scenarios.

For example, in a V2X ecosystem, a host vehicle (HV) may receive a basic safety message (BSM) over-the-air (OTA) from a remote vehicle (RV) via a V2X communication system of its on board vehicle computing system, and forwards it to an application for processing. Often, this processing includes parsing out and decoding information provided in the BSM, analyzing the information, and computing a time-to-collision (TTC) or relevance of the RV that sent the BSM to the HV. Target classification reduces the number of BSMs that are transmitted to the application or other secondary data consumer of the computing system of the HV based on a predefined TTC so that irrelevant or extraneous data is filtered out of the processing, thereby reducing demanded processing power and saving bandwidth when passing targets through processing applications.

However, target classification is often performed based on fixed zones. The fixed zones have fixed dimensions and shapes in order to consider certain types of scenarios where identification of targets of interest is important. For example, sizes of the zones are considered based on high speed traveling scenarios (e.g., 100 miles per hour). For example, a zonal length may be defined based on a predetermined relative speed of 200 miles per hour and a TTC of 3 seconds, the zonal length thus being roughly 270 meters. A geometry of the fixed zone is arranged about the HV. For example, a circular geometry based on a zonal length of 270 meters may have a radius of 270 with the HV being a center of the circle. All the perceived targets (e.g., RVs) are spatially arranged in the context of the geometry, for example based on location data provided in received messages therefrom, in order to identify a subset of the targets that fall within the fixed zone. This subset of targets are then further processed in order to determine possibility of collision and if identified, present a notification to a driver of the HV. This processing may use lane matching, heading, speed, and other parameters as provided by the information in the BSM.

Such filtering of irrelevant RV messages often uses distance filters that filter out any messages received from RVs beyond a configured distance from the vehicle (e.g., outside of the predetermined geometry of the target zone). As such, for a given distance, all RVs beyond that given distance that send messages to the HV are filtered out to be excluded from further processing. This distance or otherwise fixed zone based approach does not account for differing speeds, including speed of the HV, speed of the RV, and relative speed therebetween. For example, when vehicles are moving at relatively high speed, there is likely to be less vehicles within the fixed zone than when vehicles are moving at relatively slow speed, as is the case during times of traffic or congestion. When the HV and one or more RVs are moving at relatively slow speed and there is a relatively high volume of vehicles present within the fixed target zone, unnecessary processing of messages may occur.

As an example, as explained above, a zonal length of 270 meters may be based on a relative speed between HV and RV or 200 miles per hour (each traveling at 100 mph in opposite, oncoming directions). At such a speed, an expected number of vehicles within the target zone may be relatively few. However, when traveling at considerably lower speed, the actual number of vehicles with the target zone may be much greater, leading to unnecessary processing of irrelevant targets.

Similarly, when the HV and one or more RVs are moving a relatively high speed, a fixed zone that has dimensions based on an average or slow speed scenario may erroneously filter out relevant messages. Further, the shape of the fixed zone may erroneously exclude relevant RVs during certain scenarios. For example, a cross-shaped zone with a fixed angle position about the HV may miss an RV as an HV makes a 90 degree turn because the fixed geometry does not account for the temporary altered angle.

Dynamic target classification, as herein disclosed, addresses at least some of these issues by performing target classification to filter received messages in a dynamic way based on a number of factors. Dynamic target classification may include generating a dynamic target zone based on parameters of the HV, parameters of the one or more RVs from whom BSMs are received, and external parameters. For example, dynamic target classification may include generation of a target zone based on speed and location of the HV, speed and location of an RV, relative speed between the HV and the RV, and/or other factors. Further, an intended route of the HV may also be used when generating the target zone. Further, in some examples, external parameters such as road geometry, traffic status, and the like, may affect generation of the target zone as will be herein described.

With the dynamic target zone determined based on the multitude of parameters, target classification may be performed for received BSMs to determine relevancy of the one or more RVs. Dynamic target classification as herein presented accounts for varying road conditions, including presumed number of vehicles in a surrounding area based on HV speed, relative speed, and traffic status. Thus, target classification may be performed to filter out a larger percentage of irrelevant BSMs and to avoid filtering out relevant RVs. Filtering out a larger amount of irrelevant BSMs may reduce processing power demands of the vehicle computing system and decrease demanded bandwidth, thus increasing the efficiency of the system overall.

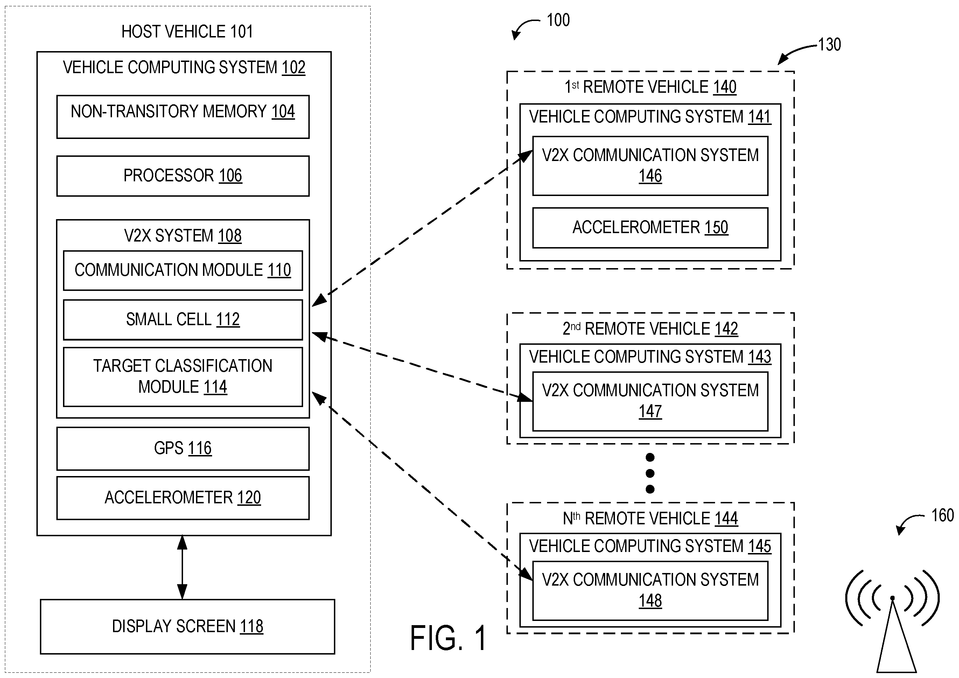

FIG. 1 shows a V2X ecosystem 100, including a vehicle computing system 102 of a host vehicle (HV) 101 and one or more remote vehicles (RVs) 130. The one or more RVs 130, as herein presented, may include a first RV 140, a second RV 142, and others up to an Nth RV 144, however it should be understood that the one or more RVs 130 of the V2X ecosystem 100 may include just one RV, two RVs, or any other suitable number of RVs that are feasible to be on the road together. BSM and other types of messages may be transmitted between the HV 101 and the one or more RVs 130. The HV 101 and/or the one or more RVs 130 may each be a car, a bus, a truck, or a different type of machinery or vehicle operated by an operator. HV 101 and/or the one or more RVs 130 may be powered by an internal combustion engine, an electric vehicle powered by an electrical power source, a hydrogen-powered vehicle, or a hybrid vehicle powered by both an internal combustion engine and an electrical power source. HV 101 and/or the one or more RVs 130 may also be a specialized vehicle used in a specific environment, such as, for example, a golf cart or transportation vehicle used in certain areas of a private facility such as an indoor facility. HV 101 and/or the one or more RVs 130 may be operated on public and/or private roads and highways, and in general, may be any type of vehicle operated by an operated.

Vehicle computing system 102 includes one or more processors 106 configured to execute machine readable instructions stored in non-transitory memory 104. Similarly, each of the one or more RVs 130 may comprise a vehicle computing system that includes one or more processors configured to execute machine readable instructions stored in non-transitory memory. For example, the first RV 140 may comprise a vehicle computing system 141, the second RV 142 may comprise a vehicle computing system 143, and the Nth RV 144 may comprise a vehicle computing system 145. Memory 104 and other memory referred to herein may include one or more data storage structures, such as optical memory devices, magnetic memory devices, or solid-state memory devices, for storing programs and routines executed by processor(s) 106 or other processors herein described, to carry out various functionalities disclosed herein. Memory 104 and other memory herein described may include any desired type of volatile and/or non-volatile memory such as, for example, static random access memory (SRAM), dynamic random access memory (DRAM) flash memory, read-only memory (ROM), etc.

Processor(s) 106 and other processors referred to herein may be any suitable processor, processing unit, or microprocessor, for example. Processor(s) 106 may be a multiprocessor system, and thus, may include one or more additional processors that are identical or similar to each other and that are communicatively coupled via an interconnection bus. Processor(s) 106 may be single core or multi-core, and the programs executed thereon may be configured for parallel or distributed processing. In some embodiments, processor(s) 106 may optionally include individual components that are distributed throughout two or more devices, which may be remotely located and/or configured for coordinated processing. In some embodiments, one or more aspects of processor(s) 106 may be virtualized and executed by remotely-accessible networked computing devices configured in a cloud computing configuration.

Vehicle computing system 102 may include a V2X communication system 108, also referred to herein as V2X system 108, which may include a communication module 110 and a small cell 112. Each of the one or more RVs 130 may each comprise a V2X communication system. For example, the vehicle computing system 141 of the first RV 140 may comprise a V2X communication system 146, the vehicle computing system 143 of the second RV 142 may comprise a V2X communication system 147, and the vehicle computing system 145 of the Nth RV 144 may comprise a V2X communication system 148. Vehicle computing system 102 may be configured to communicate with each of the one or more RVs 130 via V2X using V2X system 108 and the respective V2X systems of the one or more RVs 130. For example, the V2X communication system 108 may be configured to transmit and receive BSMs to and from the one or more RVs 130.

For such purposes, V2X system 108 may include a communication module 110, which may manage wireless communication between the vehicle computing system 102 and the one or more RVs 130 and/or other communication modules, RSUs, and/or mobile devices configured to communicate via V2X communication. Similarly, each of the one or more RVs 130 may be configured to communicate with vehicle computing system 102 via respective V2X systems. Each of the V2X systems of the one or more RVs 130, similar to the V2X system 108 of the HV 101, may comprise a communication module, which may manage wireless communication between a given RV and the HV 101 and/or other communication modules of other vehicles, RSUs, and/or mobile devices configured to communicate via V2X communication. For example, the V2X communication system 146 of the first RV 140 may transmit one or more BSMs to communication module 110, which may communicate a location of the first RV 140 to vehicle computing system 102. If the first RV 140 is within a threshold distance or within a designated target region of HV 101, as will be further described below, V2X system 108 may generate an alert, which may be displayed to a driver of HV 101 via a display screen 118 of HV 101. For example, display screen 118 may include a dashboard display of HV 101, and the alert may be generated on a portion of the dashboard display.

Communication module 110, and other communication modules of V2X communication systems herein described, may support wireless communication between the one or more RVs 130 and the vehicle computing system 102 of the HV 101. The wireless communication may rely on one or more of various wireless technologies (e.g., radio frequency (RF), infrared, near field communication (NFC), etc.). For example, a wireless connection may be established via an RF link that supports bidirectional communication, whereby RF signals may be transmitted from the V2X communication system of one of the one or more RVs 130 and received at communication module 110, and/or RF signals may be transmitted by communication module 110 and received at the V2X communication system of the one of the one or more RVs 130. In various examples, the V2X communication systems of the one or more RVs 130 may communicate with communication module 110 (and vice-versa) via radio technologies such as Dedicated Short Range Communication (DSRC) and/or cellular V2X (CV2X) communications, (e.g., sidelink connections via PC5 interface/LTE). The V2X communication systems of the one or more RVs 130 may communicate via a wireless local area network (LAN) or wide area network (WAN) using any past, present, or future communication protocol (e.g., BLUETOOTH™, USB 2.0, USB 3.0, etc.). In some examples, communication module 110 may communicate with the V2X communication systems of the one or more RVs 130 via a wireless network 160. In various embodiments, wireless network 160 may be or include the Internet.

Small cell 112 may provide occupants of the HV 101 increased coverage for cellular data. For example, small cell 112 may include SIM card of a Telematics Control Unit (TCU) of a vehicle used for enhanced 911 services. In various embodiments small cell 112 may be a femtocell included in HV 101, which may have greater coverage with less signal loss.

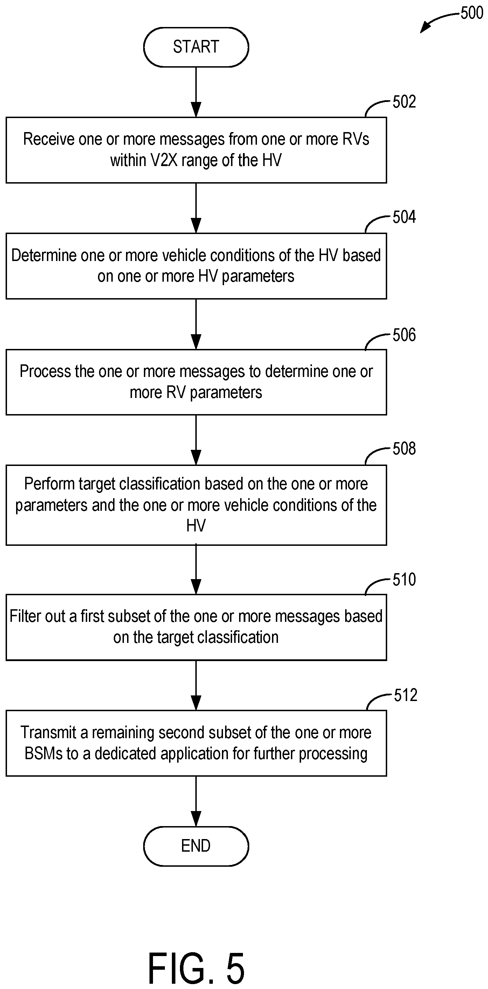

Vehicle computing system 102 may further include a target classification module 114. The target classification module 114 may comprise instructions for determining relevant targets among the one or more RVs 130 from which BSM data is received. As will be further described with respect to FIGS. 5-7, the target classification module 114 may determine relevant targets in a dynamic manner based on speed of the HV 101, speed of the one or more RVS 130, relative speed therebetween, predefined TTC, map data, including in some examples road speed limit data, vehicle route intent, RV and/or HV length, and more. For example, the BSM data that is received by the V2X communication system 108 from the one or more RVs 130 may include data related to operating states (e.g., transmission, speed, acceleration, deceleration, etc.), data related to vehicle environment (e.g., a moving direction, a geographic location such as global position system (GPS) coordinates or other Global Navigation Satellite System (GNSS) coordinates, etc.) roadside data (e.g., traffic status, accident information, etc.) received from the RSUs, internal and external scene images captured by image sensors deployed on the vehicle, or other data related to vehicles and/or environment.

The received data may be used to determine importance or relevancy of an RV to the HV and to further determine a condition of the HV with regards to a potential collision. The received data, as previously noted, may be transmitted in the form of BSMs. Although the present disclosure mainly described safety message processing, it should be understood that the techniques described herein generally apply to the processing of all types of messages. For this reason, the terms "message", "safety message" and "BSM" may be used interchangeably in the description herein. Further, it should be understood that the term BSM is used herein as exemplary, other types of safety messages such as cooperative awareness messages (CAMs) may also be used without departing from the scope of this disclosure.

The target classification module 114 may process the received message data based on determined relevancy in order to determine a subset of received message data that is relevant and the vehicle computing system 102 may then determine of the subset of received message data those that have a relevant TTC. As such, the target classification module 114 includes hardware and/or software logic for receiving the message data from the V2X communication system 108, decoding vehicle information from the message data, and identifying a subset of the message data that may traverse through multiple processing layers to a specified application for further action. The target classification module 114 may determine whether an RV of the one or more RVs 130 falls within a target zone of the HV 101 based on message data from the RV. Based on the determined result, the target classification module 114 may discard or forward the message data to other processing layers for further analysis. This early message/target classification may apply to every message that is received by the V2X communication system 108. The vehicle computing system 102 may then process messages that were determined relevant by the target classification module 114 in order to identify one or more conditions of the vehicle, such as conditions of a potential collision.

Vehicle computing system 102 may further comprise a global positioning system (GPS) 116. For example, GPS 116 may be included in a navigational guidance system of HV 101. GPS 116 may be used by vehicle computing system 102 to determine a location of HV 101 as HV 101 moves along a route. A first location of HV 101 may be compared to a second location of one of the one or more RVs 130, one or more RSUs within a threshold distance of HV 101, and/or one or more mobile devices such as pedestrian devices within the threshold distance.

Each of the one or more RVs 130 may also comprise a GPS system that may indicate respective locations of the one or more RVs 130. The respective locations of the one or more RVs 130 may be included in message data transmitted to the HV 101 via the V2X systems discussed above and may be compared to the location of the HV 101 indicated by the GPS 116 of the HV 101. Further, the HV 101 and the one or more RVs 130 may include accelerometers which may indicate an acceleration as the corresponding vehicle moves. The indicated or measured acceleration of a given vehicle may be considered in a particular direction (e.g., with a known vector) to allow comparison to other vehicles. For example, an accelerometer 120 included in the HV 101 may indicate a speed and/or acceleration of the HV 101 in a first direction while an accelerometer 150 of the first RV 140 may indicate a speed and/or acceleration of the first RV 140 in a second direction. The first direction maybe opposite the second direction in examples in which the HV 101 and the first RV 140 are traveling in opposite directions of each other, for example when the HV 101 is traveling northbound on a road and the first RV 140 is traveling southbound on the same road. As will be further described below, the vehicle computing system 102 may use the speed and/or accelerations of the HV 101 and the one or more RVs 130 to determine relative speed(s) thereof.

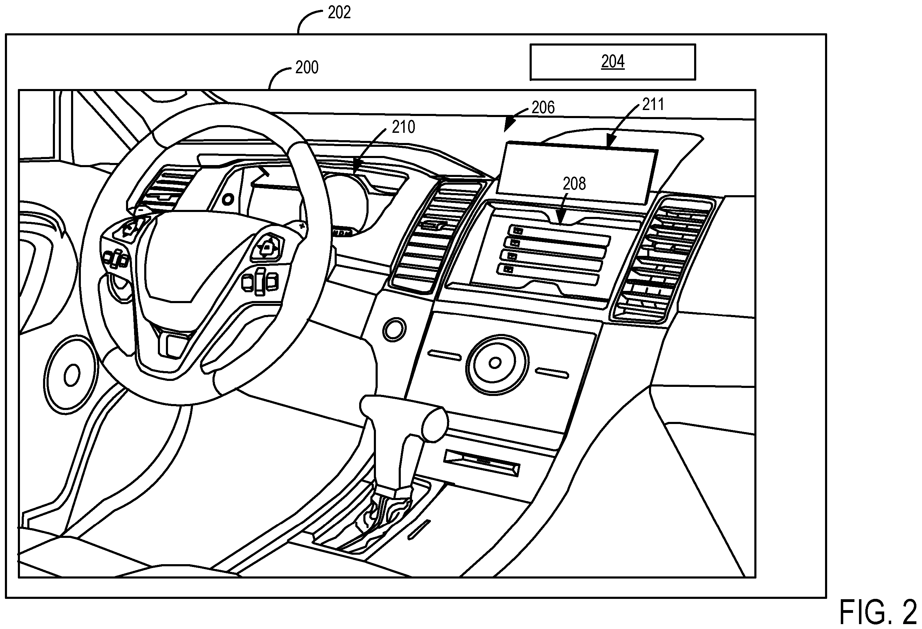

FIG. 2 shows an example partial view of an interior of a cabin 200 of a vehicle 202, in which a driver and/or one or more passengers may be seated. Vehicle 202 may be a non-limiting example of the HV 101 shown by FIG. 1 and described above.

Vehicle 202 of FIG. 2 may be a motor vehicle including drive wheels (not shown) and a power source 204 configured to provide torque to the drive wheels, such as an internal combustion engine and/or battery. In examples in which the power source 204 includes an internal combustion engine, the internal combustion engine may include one or more combustion chambers which may receive intake air via an intake passage and exhaust combustion gases via an exhaust passage. Vehicle 202 may be a road automobile, among other types of vehicles. In some examples, vehicle 202 may include a hybrid propulsion system including an energy conversion device operable to absorb energy from vehicle motion and/or the engine and convert the absorbed energy to an energy form suitable for storage by an energy storage device. Vehicle 202 may be a fully electric vehicle in some examples, incorporating fuel cells, solar energy capturing elements, and/or other energy storage systems for powering the vehicle.

As shown, the vehicle 202 may include an instrument panel 206 with various displays and controls accessible to a human driver (also referred to as the user and/or occupant) of vehicle 202. For example, instrument panel 206 may include a touch screen 208 of an in-vehicle computing system (e.g., vehicle computing system 102 of FIG. 1) and an instrument cluster 210. Touch screen 208 may receive user input to the in-vehicle computing system for controlling visual display output, user preferences, control parameter selection, and so on. While the example system shown in FIG. 2 includes controls that may be performed via a user interface of the in-vehicle computing system, such as touch screen 208, without a separate control panel, in other embodiments, the vehicle may include additional control panels. In some embodiments, one or more hardware elements of in-vehicle computing system 209, such as touch screen 208, a display screen 211 (e.g. display screen 118), various control dials, knobs and buttons, memory, processor(s), and any interface elements (e.g., connectors or ports) may form an integrated head unit that is installed in instrument panel 206 of the vehicle. The head unit may be fixedly or removably attached in instrument panel 206. In additional or alternative embodiments, one or more hardware elements of in-vehicle computing system 209 may be modular and may be installed in multiple locations of the vehicle.

During operation of vehicle 202, the in-vehicle computing system may be configured to receive electronic signals from the various sensors of the vehicle 202, in some examples. Additionally, the in-vehicle computing system may be configured to update its software and install new software configurations. As previously described, the in-vehicle computing system may be configured to establish communication with an OTA client integrated charging station and receive software updates from the charging station. As an example, the charging station may determine vehicle specifics of the vehicle 202 and then determine, via communication with an OEM system, whether updated software is available for the vehicle 202. If a software update is available, the charging station may prompt the vehicle 202 to display a message on display screen 211 indicating software update availability for which the user may input a response indicating a desire to proceed with installing the software update.

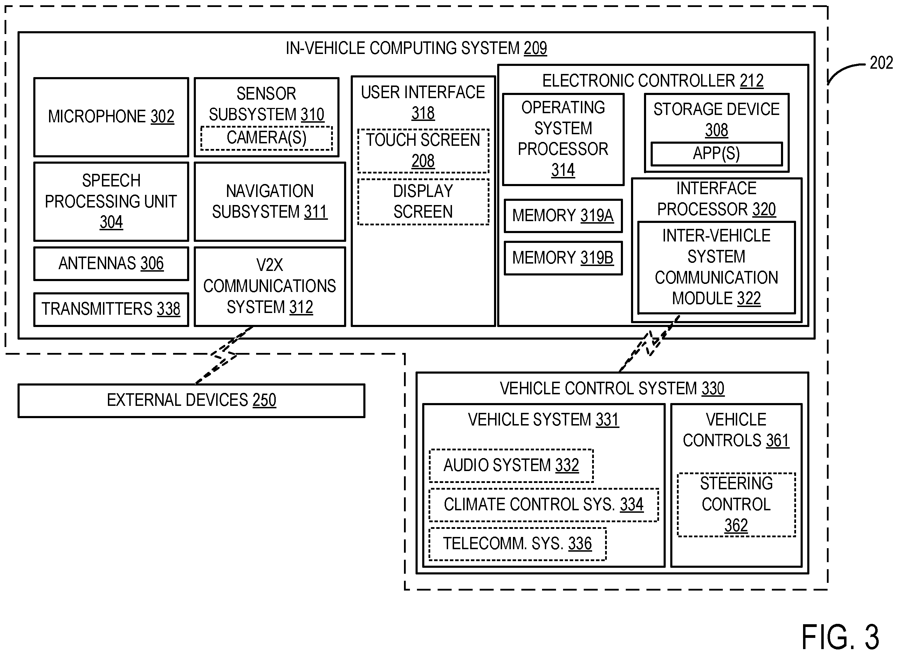

FIG. 3 shows a block diagram of an in-vehicle computing system 209 integrated inside vehicle 202, where in-vehicle computing system 209 may be a non-limiting example of vehicle computing system 102 of HV 101 of FIG. 1. In-vehicle computing system 209 may be referred to herein as a controller and/or electronic controller in some examples. In-vehicle computing system 209 may perform one or more of the methods described herein in some embodiments. In-vehicle computing system 209 may include, or be coupled to, various vehicle systems, sub-systems, hardware components, as well as software applications and systems that are integrated in, or integratable into, vehicle 202.

In-vehicle computing system 209 may include one or more processors including an operating system processor 314 and an interface processor 320. Operating system processor 314 may execute an operating system on in-vehicle computing system 209, and control input/output, display, and other operations of in-vehicle computing system 209. Interface processor 320 may interface with a vehicle control system 330 via an inter-vehicle system communication module 322.

Inter-vehicle system communication module 322 may output data to one or more other vehicle systems 331 and/or one or more other vehicle control elements 361, while also receiving data input from other vehicle systems 331 and other vehicle control elements 361, e.g., by way of vehicle control system 330. When outputting data, inter-vehicle system communication module 322 may provide a signal via a bus corresponding to any status of the vehicle, the vehicle surroundings, or the output of any other information source connected to the vehicle. Vehicle data outputs may include, for example, analog signals (such as current velocity), digital signals provided by individual information sources (such as clocks, thermometers, location sensors such as GPS sensors, and so on), digital signals propagated through vehicle data networks (such as an engine controller area network (CAN) bus through which engine related information may be communicated, a climate control CAN bus through which climate control related information may be communicated, and a multimedia data network through which multimedia data is communicated between multimedia components in the vehicle), and so on. For example, in-vehicle computing system 209 may retrieve from the engine CAN bus the current speed of the vehicle estimated by the wheel sensors, a power state of the vehicle via a battery and/or power distribution system of the vehicle, an ignition state of the vehicle, a condition of one or more air bags of the vehicle, a condition of hazard lights of the vehicle, a condition of the power source 204 (shown by FIG. 2) of the vehicle, and so on. In addition, other interfacing means such as Ethernet may be used as well without departing from the scope of this disclosure.

A storage device 308 may be included in in-vehicle computing system 209 to store data such as instructions executable by operating system processor 314 and/or interface processor 320 in non-volatile form. Storage device 308 may store application data to enable in-vehicle computing system 209 to run an application for connecting to a cloud-based server and/or collecting information for transmission to the cloud-based server. The application may retrieve information gathered by vehicle systems/sensors, input devices (e.g., a user interface 318), data stored in one or more storage devices, such as a volatile memory 319A or a non-volatile memory 319B, devices in communication with the in-vehicle computing system, and so on. In-vehicle computing system 209 may further include a volatile memory 319A. Volatile memory 319A may be random access memory (RAM). Non-transitory storage devices, such as non-volatile storage device 308 and/or non-volatile memory 319B (e.g., non-transitory memory), may store instructions and/or code that, when executed by a processor (e.g., operating system processor 314 and/or interface processor 320), controls in-vehicle computing system 209 to perform one or more of the actions described in the disclosure.

A microphone 302 may be included in in-vehicle computing system 209 to receive voice commands from a user, to measure ambient noise in the vehicle, and so on. A speech processing unit 304 may process voice commands, such as the voice commands received from microphone 302. In some embodiments, in-vehicle computing system 209 may also be able to receive voice commands and sample ambient vehicle noise using a microphone included in an audio system 332 of the vehicle.

One or more additional sensors may be included in a sensor subsystem 310 of in-vehicle computing system 209. For example, sensor subsystem 310 may include a camera, such as a rear view camera for assisting a user in parking the vehicle and/or a cabin camera for identifying a user (e.g., using facial recognition and/or user gestures). Sensor subsystem 310 of in-vehicle computing system 209 may communicate with and receive inputs from various vehicle sensors and may further receive user inputs. For example, the inputs received by sensor subsystem 310 may include transmission gear position, transmission clutch position, gas pedal input, brake input, transmission selector position, vehicle speed, engine speed, mass airflow through the engine, ambient temperature, intake air temperature, and so on, as well as inputs from climate control system sensors (such as heat transfer fluid temperature, antifreeze temperature, fan speed, passenger compartment temperature, desired passenger compartment temperature, ambient humidity, and so on), an audio sensor detecting voice commands issued by a user, a fob sensor receiving commands from and optionally tracking the geographic location/proximity of a fob of the vehicle, and so on.

While certain vehicle system sensors may communicate with sensor subsystem 310 alone, other sensors may communicate with both sensor subsystem 310 and vehicle control system 330, or may communicate with sensor subsystem 310 indirectly via vehicle control system 330. A navigation subsystem 311 of in-vehicle computing system 209 may generate, transmit, receive, and/or process navigation information such as location information (e.g., via a GPS sensor and/or other sensors from sensor subsystem 310), route guidance, traffic information, point-of-interest (POI) identification, and/or provide other navigational services for the driver.

A V2X communications system 312 of in-vehicle computing system 209 may be coupleable to and/or communicate with one or more external devices 250 located external to vehicle 202. The V2X communications system 312 may be included as part of or otherwise coupled to the vehicle software system 108 described with respect to FIG. 1. The V2X communications system 312 is in electronic communication with the electronic controller 212 of the vehicle 202 and may be commanded by the electronic controller 212 to establish communication connections and generate and transmit communications, such as BSMs, similar to the examples described above. As one example, the electronic controller 212 may command the communications system 312 to establish communication with one or more external devices 250. The external devices 250 may include other vehicles, fuel providers (e.g., charging stations), RSUs arranged along roadways, and so on via V2X and/or one or more other types of communication, including wired communication and/or OTA programming such as via WiFi or cellular data. In some examples, the V2X communications system 312 may communicate wirelessly with the external devices 250 via a communication module.

Vehicle control system 330 may include controls for controlling aspects of various vehicle systems 331 involved in different in-vehicle functions. These may include, for example, controlling aspects of vehicle audio system 332, aspects of a climate control system 334, aspects of a telecommunication system 336, and so on. The vehicle control system 330 may operate based on stored operating system software.

Vehicle control system 330 may also include controls for adjusting the settings of various vehicle control elements 361 (or vehicle controls, or vehicle system control elements) related to the engine and/or auxiliary elements within the cabin of the vehicle, such as one or more steering wheel controls 362 (e.g., steering wheel-mounted audio system controls, cruise controls, windshield wiper controls, headlight controls, turn signal controls, and so on), instrument panel controls, microphone(s), accelerator/brake/clutch pedals, a gear shift, door/window controls positioned in a driver or passenger door, seat controls, cabin light controls, audio system controls, cabin temperature controls, and so on. Vehicle control elements 361 may also include internal engine and vehicle operation controls (e.g., engine controller module, actuators, valves, and so on) that are configured to receive instructions via the CAN bus of the vehicle to change operation of one or more of the engine, exhaust system, transmission, and/or other vehicle system.

In-vehicle computing system 209 may further include one or more antennas 306. The in-vehicle computing system may obtain broadband wireless internet access via antennas 306, and may further receive broadcast signals such as radio, television, weather, traffic, and the like. In some examples, one or more antennas may be included with the communications system 312 and may be configured to receive communications from vehicles or other external entities external to the vehicle 202, including charging stations. In-vehicle computing system 209 may receive positioning signals such as GPS signals via antennas 306. The in-vehicle computing system may also receive wireless commands via radio frequency (RF) such as via antennas 306 or via infrared or other means through appropriate receiving devices. In some embodiments, antenna 306 may be included as part of audio system 332 or telecommunication system 336. Additionally, antenna 306 may provide AM/FM radio signals to external devices 250, in some examples.

The vehicle 202 further includes one or more transmitters 338. In some examples, one or more of the transmitters 338 may be integrated together with one or more of the antennas 306 to form one or more transceivers configured to generate and transmit OTA communications, and receive and process OTA communications, through communications system 312.

One or more elements of in-vehicle computing system 209 may be controlled by a user via user interface 318. User interface 318 may include a graphical user interface presented on a touch screen, such as touch screen 208 and/or display screen 211 of FIG. 2, and/or user-actuated buttons, switches, knobs, dials, sliders, and so on. For example, user-actuated elements may include steering wheel controls, door and/or window controls, instrument panel controls, audio system settings, climate control system settings, and the like. A user may also interact with one or more applications of in-vehicle computing system 209 via user interface 318. In addition to receiving a user's vehicle setting preferences on user interface 318, vehicle settings selected by in-vehicle control system 330 may be displayed to a user on user interface 318. Notifications and other messages (e.g., received messages), as well as navigational assistance, may be displayed to the user on a display of the user interface. User preferences/information and/or responses to presented messages may be performed via user input to the user interface.

Although the electronic controller 212 is shown including the operating system processor 314, memory 319A, memory 319B, and so on, in some embodiments the electronic controller 212 may include a different number and/or configuration of components. For example, the electronic controller 212 may additionally be integrated with the one or more antennas 306, the one or more transmitters 338, and so on.

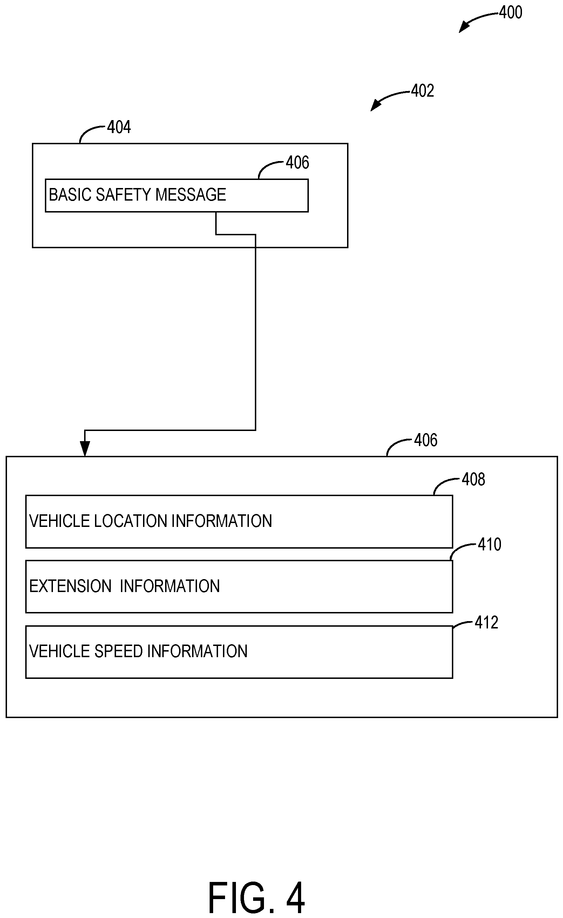

Referring to FIG. 4, a block diagram 400 schematically illustrating a V2X communication 402 including a BSM 406 is shown. The V2X communication 402 is formatted (e.g., structured) in accordance with SAE Surface Vehicle Standard J2735, and may be generated and transmitted utilizing a Dedicated Short Range Communications (DSRC) medium, in some examples. The V2X communication 402 may be generated and transmitted by a vehicle experiencing conditions in which aid from an external source is desired. For example, the V2X communication 402 may be generated and transmitted by one or more of the vehicle 102 shown by FIG. 1 and described above, vehicle 202 shown by FIG. 2 and described above, or vehicle 202 shown by FIG. 3 and described above.

The V2X communication 402 carries a message 404 (e.g., structure) that may include a plurality of different data frames and data elements configured to provide an indication of vehicle conditions. The vehicle conditions as described herein refer to conditions of the vehicle generating and transmitting the V2X communication 402. The vehicle may be an HV, such as HV 101 of FIG. 1, or an RV, such as one of the one or more RVs 130 of FIG. 1. In some examples, the message 404 is formatted in accordance with section 5.1 of SAE Surface Vehicle Standard J2735. In other examples, the message 404 may be formatted as a non-standard message in cloud based solutions.

In one example, the message 404 may be formatted as shown:

```
BasicSafetyMessage ::= SEQUENCE {

__ Part I, Sent at all times with each message

coreData        BSMcoreData,

__ Part II Content

partII   SEQUENCE (SIZE(1..8)) OF

          PartIIcontent {{ BSMpartIIExtension }} OPTIONAL

regional         SEQUENCE (SIZE(1..4)) OF

          RegionalExtension {{REg-BasicSafetyMessage}} OPTIONAL

   …

   }

__ BSM Part II content support

PARTII-EXT-ID-AND-TYPE ::= CLASS {

   &id    PartII-Id UNIQUE,
```

&Type

} WITH SYNTAX {&Type IDENTIFIED BY &id}

PartIIContent { PARTII-EXT-ID-AND-TYOE: Set} ::= SEQUENCE {

    partII-Id        PARTII-EXT-ID-AND-TYOE.&id( {Set} ),

    partII-Value   PARTII-EXT-ID-AND-TYPE.&Type( {Set}{@partII-Id} )

}

PartII-Id ::= INTEGER (0..63)

    vehicleSafetyExt      PartII-Id::= 0  - - VehicleSafetyExtensions

    specialVehicleExt     PartII-Id::= 1  - - SpecialVehicleExtensions

    supplementalVehicleExt    PartII-Id::= 2  - - SupplementalVehicleExtensions

The message 404 includes a BSM 406 stored therein. The BSM 406 may be similar to, or the same as, the BSMs described above with reference to FIG. 1. The BSM 406 includes vehicle location information 408 and vehicle speed information 412, and may further include an extension information 410. The BSM 406 may be formatted in accordance with section 5.2 of SAE Surface Vehicle Standard J2735.

The vehicle location information 408 includes a latitude, longitude, and/or elevation of the vehicle generating and transmitting the BSM 406. In some examples, the vehicle location information 408 may also include direction of travel and intended route (e.g., based on a stored route in a Maps application, based on vehicle signaling, or based on steering wheel angle and/or yaw rate). The vehicle location information 408 may be stored within a BSMcoreData data frame of the BSM 406, in some examples, as defined by section 5.2 of SAE Surface Vehicle Standard J2735. For example, the vehicle latitude may be stored in a latitude data element (e.g., "lat") of the BSMcoreData data frame, the vehicle longitude may be stored in a longitude data element (e.g., "long") of the BSMcoreData data frame, and the vehicle elevation may be stored in an elevation data element (e.g., "elev") of the BSMcoreData data frame.

The BSM 406 may also comprise vehicle speed information 412. The vehicle speed information 412 may include a current traveling speed of the vehicle to which the BSM 406 corresponds. Further, in some examples, the vehicle speed information 412 may indicate whether the vehicle is traveling under, at, or above a known speed limit for a road on which the vehicle is traveling. The vehicle location information 408 may be stored within a BSMcoreData data frame of the BSM 406, in some examples, as defined by section 5.2 of SAE Surface Vehicle Standard J2735.

The extension information 410 may be a BSMpartIIExtension content (e.g., data frame) of the BSM 406, in accordance with section 5.2 of SAE Surface Vehicle Standard J2735. In some examples, request signatures may be stored within the extension information 410 if the vehicle to which the BSM corresponds is sending a specific request to intended targets, such as vehicle aid requests or charging requests.

Turning now to FIG. 5, a flowchart illustrating a method 500 for message processing. The method 500 may be performed by a vehicle computing system of a host vehicle, such as vehicle computing system 102 of HV 101 of FIG. 1. The method 500 may be executed by one or more processors based on instructions stored in memory of the vehicle computing system.

At 502, method 500 includes receiving one or more messages from one or more RVs within V2X range of the HV. As described with respect to FIG. 1, a V2X communication system of the vehicle computing system may comprise a communications module that may receive message data from similar V2X communication systems of one or more RVs. The V2X communication system of the HV may be configured with a transmission range such that message data from RVs within that transmission range are received by the V2X communication system. The one or more messages may comprise information of one or more vehicle conditions of each corresponding RV, including vehicle speed, direction, location (e.g., latitude and longitude), and more, as described with respect to FIG. 4.

At 504, method 500 includes determining one or more vehicle conditions of the HV based on one or more HV parameters. The one or more HV parameters may comprise vehicle speed, vehicle direction, yaw rate, vehicle location, and the like. The one or more vehicle conditions of the HV may comprise intended route conditions, such as whether the vehicle is turning or intending to turn. Each of the vehicle conditions may be known to or determined by the vehicle computing system of the HV. In some examples, the one or more vehicle conditions of the HV may be determined at regular intervals and/or continuously. In some examples, a timestamp of the vehicle conditions may be recorded in order to be matched to the one or more messages.

At 506, method 500 includes processing the one or more messages from the one or more RVs to determine one or more RV parameters thereof. The one or more RV parameters may comprise RV speed, RV direction, RV location, RV location with respect to HV location, and the like. As an example, processing the one or more messages as herein described may include decoding the data to extract the one or more RV parameters. As noted with respect to FIG. 4, the one or more messages may indicate vehicle speed information and vehicle location information. Further, processing the one or more BSMs may be performed with respect to the one or more vehicle conditions and one or more parameters of the HV, as determined at 504. For example, vehicle speed of an RV as indicated by a message may be processed with respect to vehicle speed of the HV in order to determine a relative speed. Further, vehicle location information of the RV may be processed with respect to the vehicle location of the HV to indicate a distance therebetween, respective traveling directions, and routes. The one or more RV parameters may thus also include or allow for determination of relative speed, distance between vehicles, and the like.

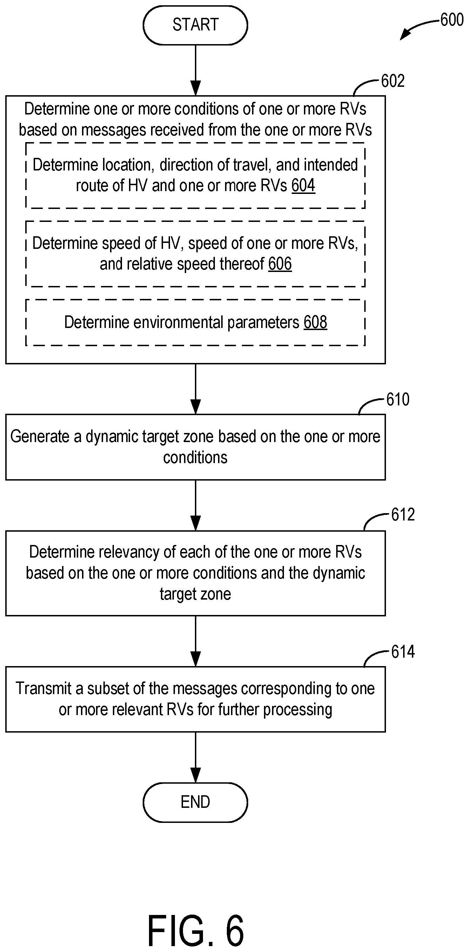

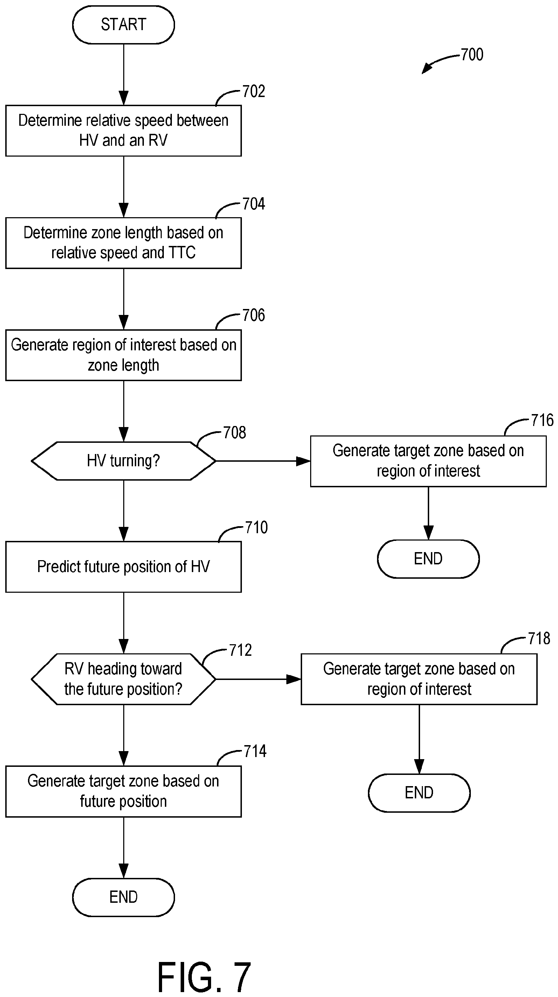

At 508, method 500 includes performing target classification based on the one or more parameters and the one or more vehicle conditions of the HV. As will be further described with respect to FIGS. 6 and 7, performing target classification may comprise determining a target zone based on the one or more parameters and the one or more vehicle conditions of the HV. For example, the target zone may be determined based on HV speed, relative speed between the HV and an RV, and an intended route of the HV, for example based on Maps data, a turn signal indication, yaw rate, and/or steering wheel angle. Further, a predefined TTC may be used to determine the target zone, as will be described below. The target zone may thus be a dynamic area depending on vehicle conditions, road conditions, and situation. Target classification may then comprise classifying whether each of the one or more RVs from which the one or more BSMs were received either lie in or out of the determined target zone.

At 510, method 500 includes filtering out a first subset of the one or more message based on the target classification. As noted, target classification indicates whether each of the one or more RVs lie in or out of the target zone. If an RV from which a message was received by the HV lies outside the target zone, the BSM may be filtered out. An RV from which a second message was received by the HV may lie within the target zone and as such the second message may not be filtered out. The first subset may include BSMs that correspond to RVs outside the target zone. In some examples, filtering messages out may include discarding the BSMs such that no further processing is performed on them.

At 512, method 500 includes transmitting a remaining second subset of the one or more messages to a dedicated application for further processing. The remaining second subset of the one or more messages may include all BSMs of the one or more messages that were not filtered out. The further processing as herein referenced may include determining potential situations for the HV based on TTCs, routes, and speeds (e.g., whether an RV is traveling at a speed and is within a distance that within the TTC would be relevant to the HV). In some examples, based on the further processing, one or more notifications may be presented to a driver of the HV. The one or more parameters of the BSMs of the second subset may indicate which notifications are to be sent to or displayed to, for example via a display screen of an infotainment unit, the driver of the HV. As an example, a Do Not Pass Warning (DNPW) notification may be presented via the display screen of the infotainment unit such that the driver is notified of a scenario in which they are advised to not attempt to pass a vehicle in front of them, such as when an oncoming RV is within a distance and traveling at a speed that would overlap with a passing route of the HV within the TTC timeframe. Other types of notifications, such as audio notifications in the form of sounds (e.g., beeps), speech, or the like, may additionally or alternatively be used. In other examples, based on the further processing, one or more vehicle operating conditions may be altered. For example, a speed of the HV may be reduced in response to a Forward Collision Warning (FCW) being identified based on the one or more parameters.

Target classification may reduce processing power demands for the vehicle computing system by reducing the number of messages (e.g., BSMs, CAMs, etc.) that have to be processed by one or more applications, such as the dedicated application discussed above. Traditional methods for target classification, as described above, use a fixed target zone that has predefined dimensions. Such a fixed zone may thus erroneously filter out relevant targets (e.g., messages of relevant RVs) and/or may not filter out enough targets, thereby resulting in over processing of data. Method 500 and the other methods herein described provide a dynamic manner of generating a target zone and performing target classification based on one or more conditions based on the information provided by the received messages and vehicle specifics of the HV known to the computing system. For example, in slow speed-high congestion scenarios, a size of the target zone may be reduced, thereby filtering out a higher percentage of received messages than with a fixed target zone. In this way, processing power may be further reduced while maintaining processing of relevant messages.

FIG. 6 shows a flowchart illustrating a method 600 for performing target classification with a dynamic target zone. Similar to method 500 described above, method 600 may be performed by a vehicle computing system of a host vehicle, such as vehicle computing system 102 of HV 101 of FIG. 1. The method 600 may be executed by one or more processors based on instructions stored in memory of the vehicle computing system, for example based on instructions stored in a target classification module (e.g., target classification module 114).

At 602, method 600 includes determining one or more conditions of one or more RVs based on BSMs received from the one or more RVs. As described with respect to FIG. 5, the HV may receive one or more messages from one or more RVs within a threshold distance from the HV. The one or more messages may have embedded, decodable data that includes information about the vehicle, as described with respect to FIG. 4. This information may include vehicle information speed, vehicle location speed, and the like for the corresponding RV.

Determining the one or more conditions may include determining location, direction of travel, and intended route of both the HV and each of the one or more, as noted at 604. The location of each of the RVs may be provided by the corresponding messages and the location of the HV may be known based on a GPS included in or otherwise associated with the vehicle computing system. The direction of travel similarly may be provided by the corresponding messages for each of the one or more RVs and the direction of travel of the HV may be provided by the GPS, and/or in some examples by a route programmed into a maps application. In some examples, intended route of the HV may be determined by the route programmed into the maps location. In other examples, intended route may be determined based on one or more vehicle conditions, such as steering wheel angle, yaw rate, and/or turn signal activation. Additionally, in some examples, vehicle length may be determined for each of the one or more RVs based on data within the messages and for the HV based on known vehicle specifics. In the instance of rear collision warnings (RCWs), the vehicle length of the HV may be considered, and in the instance of FCWs, the vehicle length of one or more RVs may be considered.

Determining the one or more conditions may additionally include determining a speed of the HV, which may be known to or determined by the vehicle computing system, a speed of each of the one or more RVs based on data embedded in the messages, and relative speed thereof for each of the RVs with respect to the HV, as noted at 606. Relative speed may be determined based on velocity components of each vehicle, which are given by equations (1), (2), (3), and (4):

$$HV_{x_{component}} = HV_{speed} * cosine\ (HV_{heading}) \qquad (1)$$

$$HV_{y_{component}} = HV_{speed} * sine\ (HV_{heading}) \qquad (2)$$

$$RV_{x_{component}} = RV_{speed} * cosine\ (RV_{heading}) \qquad (3)$$

$$RV_{y_{component}} = RV_{speed} * sine\ (RV_{heading}) \qquad (4)$$

where $HV_{x_{component}}$ is the x component of the speed of the HV, $HV_{y_{component}}$ is the y component of the speed of the HV, $RV_{x_{component}}$ is the x component of the speed of the RV, $RV_{y_{component}}$ is the y component of the speed of the RV, $HV_{heading}$ is the direction of travel of the HV in radians, and $RV_{heading}$ is the direction of travel of the RV in radians. By multiplying the speed of the HV or RV by the corresponding cosine or sine of the heading thereof, the x or y component of the speed may be determined. The velocity components may be determined for each of the one or more RVs individually.

Based on the velocity components determined for each of the RVs and the HV, the relative speed between each of the RVs and the HV may be determined based on equations (5), (6), and (7):

$$V_{rel_x} = RV_{x_{component}} - HV_{x_{component}} \qquad (5)$$

$$V_{rel_y} = RV_{y_{component}} - HV_{y_{component}} \qquad (6)$$

$$V_{rel} = \sqrt{\left(V_{rel_x}\right)^2 + \left(V_{rel_y}\right)^2} \qquad (7)$$

wherein $V_{rel_x}$ is the x component of relative velocity, $V_{rel_y}$ is the y component of the relative velocity, $V_{rel}$ is the relative velocity, and the other variables are as previously defined.

Further, one or more environmental parameters may be determined, as noted at 608. The one or more environmental parameters may include current traffic status, road geometry, including number of lanes, position of lanes, upcoming intersections and lane merges, and the like in a vicinity of the HV's location. The location of each of the one or more RVs may be considered within the road geometry as determined. The environmental parameters relate to the external factors of the area in which the HV and the one or more RVs are driving. The one or more environmental parameters, in some examples, may be provided by the maps application included in the vehicle computing system. The maps application and the GPS may thus indicate location of the relevant vehicles and their surroundings.

The one or more conditions of the one or more RVs may include relative speed, distance between RV and HV, potential intersections of respective routes, road congestion status, and/or the like. Each of the one or more conditions may be determined by the vehicle computing system based on the above determined parameters, including speed information, location information, and the like, based on the information provided in the BSMs and information known to the vehicle computing system.

At 610, method 600 includes generating a dynamic target zone based on the one or more conditions. As will be further described with respect to FIG. 7, the dynamic target zone may be generated based on predefined TTC, relative speed, speed of the HV, the one or more environmental parameters, and more. Thus, the dynamic target zone may be adjustable based on how fast the vehicles are traveling, whether there are a larger number of RVs present such as during periods of congestion, locations of RVs at intersections when the HV is turning, and other scenarios. In this way, relevant RVs may not be filtered out, while extraneous RVs, such as during periods of congestion or traffic, may be filtered out to reduce processing demands.

As noted, generation of the dynamic target zone may be based in part on a defined TTC, as will be further described with respect to FIG. 7. In some examples, a TTC of 3 seconds may be used to determine the dynamic target zone. For example, zonal length may be defined by equation (8):

$$L_{zone} = V_{Rel} * TTC \qquad\qquad (8)$$

wherein $L_{zone}$ is the zonal length and the other variables are as previously defined. Zonal length may be one aspects of a geometry of the dynamic target zone. In this way, the one or more RV parameters, including RV speed, the one or more HV parameters, including HV speed, and the one or more conditions determined thereby, including relative speed, may be used to determine the dynamic target zone, therefore taking into account current conditions and situations as the HV travels.

Further, certain scenarios may adjust the predefined TTC. For example, a notification for an approaching emergency vehicle may demand to be presented to the driver earlier than other types of notifications. Thus, when there is an emergency vehicle among the one or more RVs, as determined by message data, the dynamic target zone may be increased or decreased in size, for example by increasing or decreasing the TTC value, based on road congestion status. For example, if road congestion is high and the zonal length is proportionally short based on low relative velocity, the TTC may be increased so as to increase the zonal length, thus allowing a the emergency vehicle message to be sent on for further processing earlier than if the zonal length was shorter (in which case the emergency vehicle BSM may be filtered out until a later point in time when it is closer to the HV).

At 612, method 600 includes determining relevancy of each of the one or more RVs based on the one or more conditions and the dynamic target zone. Relevancy of an RV in some cases may be determined based on whether the RV's location is within the dynamic target zone. If the RV's location is within the dynamic target zone, the RV may be considered relevant. If the RV's location is not within the dynamic target zone, the RV may be considered irrelevant. Further, road geometry may be considered when determining RV relevancy. As a non-limiting example, an RV that is located in a lane of a road separated from the HV by a median may lie within the dynamic target zone based on distance alone but because of the median, may be considered irrelevant and therefore filtered out. Similarly, an RV may be traveling in a disconnected egress lane and may thus be considered irrelevant even if within the dynamic target zone of the HV. Further, certain RVs such as emergency vehicles may bypass filtering when approaching the HV, even when outside the dynamic target zone.

At 614, method 600 includes transmitting a subset of the messages corresponding to one or more relevant RVs for further processing. As noted above, each of the one or more RVs may be determined to be relevant or irrelevant. Messages corresponding to the one or more relevant RVs may be grouped into the subset and transmitted for further processing, similar t as described with respect to FIG. 5. A second subset comprising the remaining irrelevant RVs of the one or more RVs may be filtered out and discarded such as to be excluded from further processing.

In some examples, the dynamic target zone may be specific to a particular RV. In such examples, more than one dynamic target zone may be generated. As a non-limiting example, when a first RV is traveling at a first speed along an inside southbound lane of a four-lane road and a second RV is traveling at a second, higher speed along an outside southbound lane of the four-lane road, a first dynamic target zone may be generated for the first RV and a second dynamic target zone may be generated for the second RV. Based the speed of the first RV and a relative speed between the first RV and the HV, the first RV may be considered outside the first dynamic target zone while based on the speed of the second RV and a relative speed between the second RV and the HV, the second RV may be considered within the second dynamic target zone. Thus, the first RV may be filtered out and excluded from further processing while the second RV may not be filtered out and a message thereof may be sent for further processing based upon the different speeds and relative speeds thereof.

Turning now to FIG. 7, a flowchart illustrating an example method 700 for generating a dynamic target zone is shown. It should be understood that the method 700 as herein presented is exemplary in nature and other suitable methods for generating a target zone may be used without departing from the scope of this disclosure. The method 700 may be executed by one or more processors based on instructions stored in memory of the vehicle computing system, for example based on instructions stored in a target classification module (e.g., target classification module 114). Further, the method 700 is described herein for generation of a dynamic target zone for one RV, though it should be understood that the method 700 may be applied multiple times to generate multiple dynamic target zones, each dynamic target zone corresponding to one of one or more RVs from whom messages (e.g., BSMs or other safety messages) are received by the HV.

At 702, method 700 includes determining relative speed between the HV and the RV. As described above with respect to equations (1) through (7), relative speed may be determined based on vector components of direction of travel of the HV and the RV and the speed of the HV and the RV.

At 704, method 700 includes determining zone length based on the relative speed and a predetermined TTC. As explained with respect to FIG. 6 and equation (8), zone length may be determined as a product of the relative speed and the TTC. The TTC may be predefined and/or adjustable for given situations. For example, the predefined TTC may be 3 seconds, however for emergency vehicles, when detected, the TTC may be longer than 3 seconds.

At 706, method 700 includes generating a region of interest around the HV based on the zone length. As an example, the region of interest may be defined as a circle, with the zone length as the diameter. As another example, the region of interest may be defined in the shape of a cross, with the zone length defining a distance away in left, right, front and back directions. As yet another example, environmental parameters may also be used to determine the region of interest. For example, a shape may be an oval or an ellipse when a road median is detected and the zone length may be a length of a semi-major axis of the ellipse.

At 708, method 700 determines whether the HV is turning. Determination of whether the HV is turning may be based on detection of a turn signal indicator being turned on, GPS data, yaw rate, and the like. If the HV is turning, method 700 proceeds to 710. If the HV is not turning, method 700 proceeds to 716, where the target zone is generated based on the region of interest. For example, the target zone may be the region of interest, whereby the shape of the target zone is based on the zone length, and in some examples one or more environmental parameters such as road geometry.

At 710, method 700 includes predicting a future position of the HV. The future position of the HV may be based on the yaw rate and the speed of the HV. The future position of the HV may be determined for a particular time in the future, for example 100ms, 1 second, or other time interval that is predetermined by the vehicle computing system. The future position of the vehicle may include a predicted location as well as a predicted yaw rate, in some examples.

At 712, method 700 includes determining if the RV is heading towards the future position. As noted, the message received from the RV may indicate its current position, direction of travel, and speed. The vehicle computing system of the HV may then estimate based on the parameters of the RV, whether it is heading towards the future position of the HV. If the RV is heading toward the future position, for example if the RV may reach the future position within a specified timeframe of the HV, method 700 proceeds to 714. If the RV is not heading towards the future position, method 700 proceeds to 718 in which the target zone is generated based on the region of interest similar to as described at 716.

At 714, method 700 includes generating a target zone based on the future position. Generating the target zone based on the future position may include accounting for the zone length with respect to the future position so the target zone encompasses the position of the RV. Thus, the RV may be within the target zone and may considered relevant and the BSM thereof may be sent for further processing.

In this way, the dynamic target zone may be generated based on parameters of the RV and may thus be individualized based on the current scenario, the HV parameters, and the RV parameters. The dynamic target zone may thus be sized and configured for the specific situation, reducing amount of extraneous messages that are processed and increasing processing of relevant targets that would otherwise be missed.

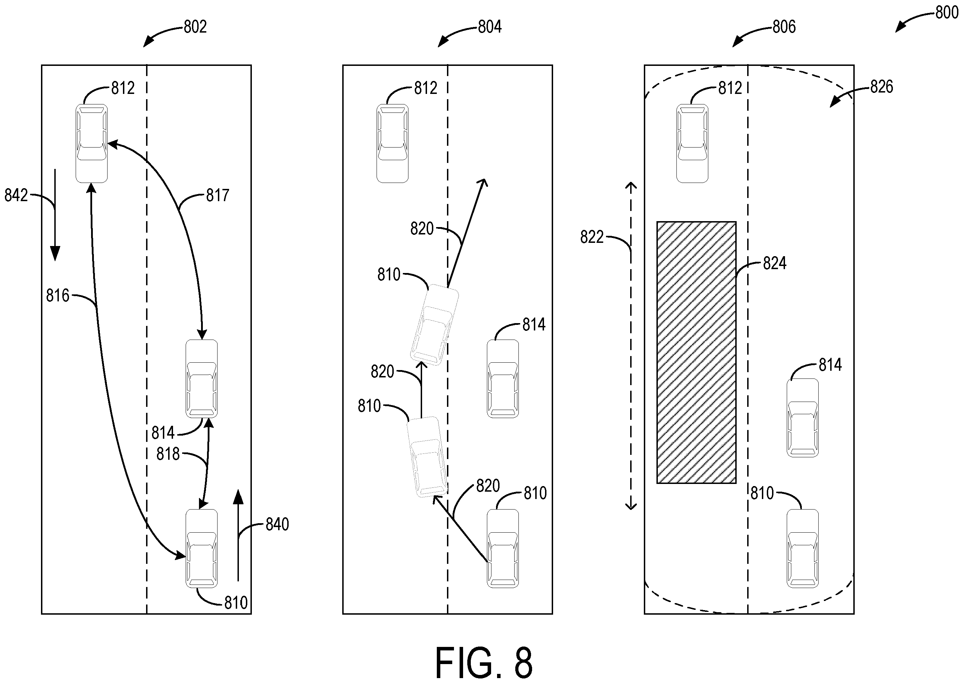

Referring to FIG. 8, diagrams illustrating a scenario 800 in which dynamic target classification may be employed. The scenario 800 is illustrated via a first diagram 802, a second diagram 804, and a third diagram 806. The first diagram 802 indicates paths of communication, the second diagram 804 indicates an expected or intended route of an HV, and the third diagram 806 indicates an expected collision area for the given intended route. The scenario 800 as depicted is a DNPW scenario in which one or more RV targets that are processed following target classification result in a DNPW notification presented to the driver of the HV.

In the scenario 800, an HV 810 is traveling along a road in a first direction, indicated by first direction arrow 840. A first RV 812 is traveling along the road in a second, opposite direction, indicated by second direction arrow 842. A second RV 814 is traveling along the road in the first direction. The second RV 814 is traveling along the road in front of the HV 810.

The HV 810 may be an example of the HV 101 described with respect to FIG. 1 and as such may be configured for V2X communication within a threshold distance (e.g., V2X range) of the HV 810. The first and second RVs 812, 814 may be examples of the one or more RVs 130 of FIG. 1 and similarly may thus be configured for V2X communication. The HV 810, the first RV 812, and the second RV 814 may all be within respective threshold distances for V2X communication therebetween. The HV 810 may establish a first communication 816 with the first RV 812 and a second communication 818 with the second RV 814. The first and second RVs 812, 814 may establish a third communication 817 therebetween. Messages, including BSMs, may be transmitted in either direction, for example from the first RV 812 to the HV 810 and vice versa. In some examples, the HV 810 may send a message to the first RV 812 and the first RV 812 may send a message to the HV 810 at the same time.

The HV 810 may have an intended route, represented by route 820 in the second diagram 804. The intended route may be known to the vehicle computing system of the HV 810 based on a turned on indicator light, steering wheel angle, yaw rate, and/or a programmed map application. For example, the road on which the HV 810 is traveling may be a two-lane highway without an upcoming intersection, as is known to the vehicle computing system based on GPS and maps data. In such an example, one or more conditions, including the driver turning on a left indicator light, and the presence of the second RV 814 in front of the HV 810, as is known based on message data from the second RV 814, may indicate that the intended route of the HV 810 is into the oncoming lane in order to pass the second RV 814. Alternatively, the intended route may be one of various preprogrammed optional routes of which the vehicle computing system considers when determining TTC and other conditions.

Target classification may be performed for the first and second RVs 812, 814, and any other RVs from which the HV 810 receives, for example based on the methods described with respect to FIGS. 5-7. In some examples, a message from the first RV 812 may have been sent for further processing based one or more factors including speed, direction of travel, and more as the first RV 812 is within a target zone 826. For example, a relative speed between the first RV 812 and the HV 810 may define the target zone 826 within which the first RV 812 is located. Additional processing of the message from the first RV 812 may consider a distance 822 between the HV 810 and the first RV 812, speed of the first RV 812 and HV 810, relative speed thereof, and the intended or expected route in order to determine an expected collision area 824.

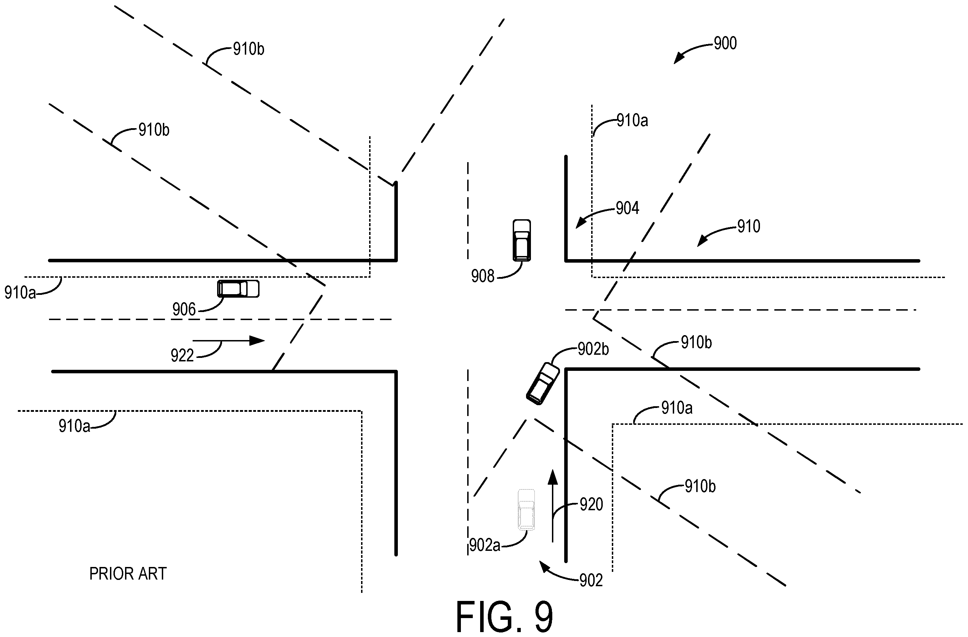

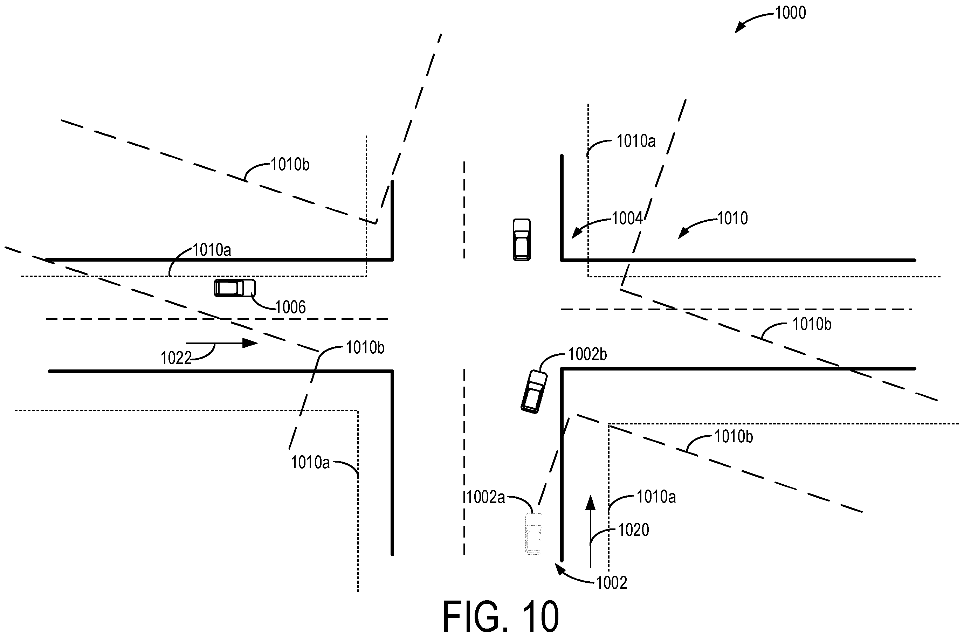

Turning now to FIGS. 9 and 10, example scenarios are shown during which identification of relevant targets for an HV via target classification may be employed. FIG. 9 shows an example scenario 900 using conventional target classification with a fixed target zone and FIG. 10 shows an example scenario 1000 using dynamic target classification with a dynamic target zone as herein disclosed. The scenarios show vehicles in multiple directions of an intersection road. The HV in each scenario may be an example of the HV 101 described with respect to FIG. 1 and may thus be equipped with a vehicle computing system configured to execute instructions for target classification.

Starting with FIG. 9, the scenario 900 shows an HV 902 at two points in time with an associated target zone 910 at those two points in time depicted diagrammatically. For example, an HV 902a at a first time is traveling in a first direction 920 towards an intersection 904. The target zone 910a may be associated with the HV 902a at the first time. The target zone 910a may be a fixed target zone with a predefined shape and size.

A first RV 906 may be travelling in a second direction 922 towards the intersection 904. The second direction, as shown in the diagram, may be perpendicular, or relatively perpendicular, to the first direction in which the HV 902 is traveling at the first time. The first RV 906 may reside within the target zone 910a at the first time. Further, a second RV 908 may be travelling in the first direction exiting the intersection and may also reside within the target zone 910a at the first time. Thus, both the first and second RVs 906, 908 may be considered by the HV 902a as potential targets at the first time, but for one or more factors, such as perpendicular directions of travel or similar speeds in the same direction, no notification may be presented to the driver of the HV.

At a second, later time, the HV 902b is angled to turn at the intersection 904 (e.g., take a right turn). Because the target zone 910 has a fixed geometry and position with respect to the HV 902, the intersection 904 itself may not be a factor for determining the scope of the target zone 910 and thus the angle of the target zone 910b may be the same with respect to the HV 902b at the second time as it is at the first time. Because of this, at the second time, the first RV 906 may no longer reside within the target zone 910b and may thus be filtered out during target classification. However, the first RV 906 may still be a relevant target for the HV 902 at the second time as the RV 906 is traveling in the second direction 922 into which the HV 902 is intending to turn. Thus, the fixed target zone filters out a relevant target due to the lack of consideration of environmental parameters, including the intersection, as well as the intended route of the HV.

FIG. 10 shows the similar scenario 1000 in which an HV 1002 is traveling in a first direction 1020 towards an intersection 1004. The scenario 1000 as shown in FIG. 10 depicts the HV 1002 and an associated dynamic target zone 1010 at a first time and a second time. A first RV 1006 is traveling in a second direction 1022 towards the intersection 1004, the second direction 1022 being perpendicular or nearly perpendicular to the first direction 1020. The HV 1002 is depicted diagrammatically at a first time and a second time, similar to the scenario 900 described above.

At the first time, the dynamic target zone 1010a has a first geometry and a first position with relation to the HV 1002a given one or more parameters and one or more vehicle conditions, as described with respect to FIGS. 6-8. The one or more parameters may include relative speed of one or more RVs from which BSMs are received at the first time, distance between HV and the one or more RVs, and environmental parameters such as road configuration, traffic status, speed limit, and the like, as previously described. The one or more vehicle conditions may comprise HV speed, direction of travel, intended route, and the like. The intended route of the HV 1002a at the first time may be based on location information from a GPS associated with the HV's vehicle computing system, and/or based on a programmed route predefined in the GPS (e.g., as set by the driver).

At the second time, the HV 1002b may be angled to turn, similar to as described with respect to FIG. 9. However, the dynamic target zone 1010b may not be angled at the same angle as the HV 1002b as it does not have a fixed geometry. For example, the intended route of the HV 1002b at the second time may also include information of a turn signal being activated, indicating that the HV 1002b is to turn in a specific direction. Further, in some examples when maps data from the GPS is available, a road onto which the HV 1002b intends to turn may also be determined. As such, geometry of the dynamic target zone 1010b may be determined based on the one or more parameters and one or more vehicle conditions, such as is described with respect to FIG. 8. The dynamic target zone 1010 as herein described may thus be configured with a geometry that does not exclude the first RV 1006. As such, a message from the first RV 1006 may be transmitted for further processing so as to allow the system to determine a potential notification to display with respect to the first RV 1006.

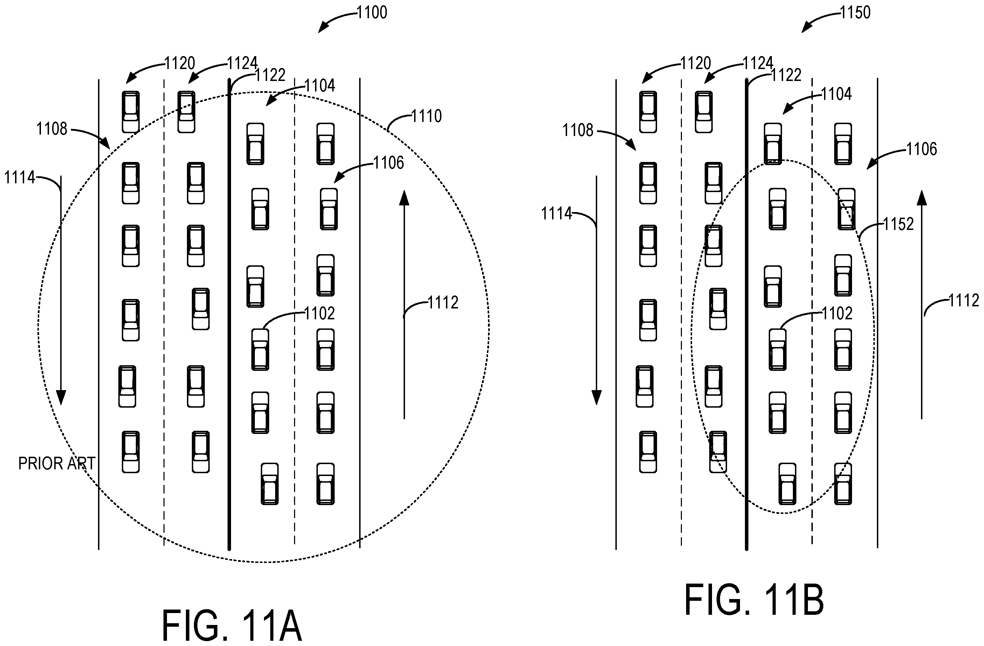

Turning now to FIGS. 11A and 11B, an example scenario is shown. FIG. 11A specifically shows the scenario when a fixed target zone is used for target classification and FIG. 11B shows the scenario when a dynamic target zone is used for dynamic target classification as is herein disclosed. FIG. 11A shows the scenario in a first diagram 1100 and FIG. 11B shows the scenario in a second diagram 1150.

In the scenario, an HV 1102 is traveling in a first direction 1112 along a road during a period of congestion. A plurality of RVs 1104 are also traveling along the road during the period of congestion, with a first subset 1106 of the plurality of RVs 1104 traveling in the first direction 1112 and a second subset 1108 of the plurality of RVs 1104 traveling in a second, opposite direction 1114. The HV 1102 may be equipped with a vehicle computing system that includes a target classification module. The HV 1102 may receive messages from each of the plurality of RVs 1104 detailing information such as location, speed, direction of travel, and the like as previously described.

As shown in FIG. 11A, a fixed target zone 1110 may be configured about the HV 1102. The fixed target zone 1110 may have a geometry that is predetermined based on a predefined relative speed between the HV and an RV and a predefined TTC (e.g., 3 seconds). The predefined relative speed between the HV and the RV may be a higher speed than the actual speeds of travel of the HV 1102 and the plurality of RVs 1104. For example, the fixed target zone 1110 may have a geometry based on a relative speed of 90 meters per second, however the actual relative speed between the HV 1102 and each of the RVs 1104 may be 1 meter per second due to the congestion on the road. In the example presented, the fixed target zone 1110 is a circle, however other geometries are possible.

As a result of the fixed target zone 1110 being determined based on a higher relative speed than the actual relative speed of the vehicles, and thus having a large area, a high percentage of the plurality of RVs from which messages are received may be sent on for further processing by a dedicated application despite a portion of those RVs being irrelevant. For example, vehicles traveling in a far lane 1120 in the second, opposite direction 1114 may be separated from the HV 1102 by a median 1122 and a near lane 1124. Therefore, RVs in the far lane 1120 may not be relevant to the HV 1102 but BSMs thereof may still be processed, resulting in unnecessary usage of processing power and bandwidth for the vehicle computing system of the HV.

In contrast, as shown in FIG. 11B, a dynamic target zone 1152 may be configured about the HV 1102 based on information provided in the messages from the plurality of RVs 1104 (e.g., speed and location of each of the RVs), one or more HV parameters (e.g., vehicle specifics such as speed, location, vehicle length, etc.), and road geometry data retrieved from a maps application based on GPS data. The road geometry may include information of the median 1122 as well as the 2-2 lane road configuration. Actual relative speed between the HV 1102 and each of the RVs 1104 may therefore be determined and, with other factors such as road geometry, the dynamic target zone 1152 may be tailored to the HV's current situation.

As such, the dynamic target zone 1152 may have a smaller area than the fixed target zone 1110. As a result, a higher percentage of the RVs may be filtered out, being determined as irrelevant. For example, the RVs traveling in the far lane 1120 in the second, opposite direction 1114 may be outside the dynamic target zone 1152 and therefore may be filtered out and not processed further. In this way, dynamic target classification may decrease processing power and used bandwidth, increasing vehicle computing system efficiency.

The technical effect of the systems and methods disclosed herein is that multiple factors affecting what is a relevant target for an HV are considered when performing target classification. With a fixed target zone, excess vehicles may be processed during times of traffic congestion, thereby increasing processing power demands of the vehicle computing system of the HV. Further, due to the fixed geometry, in some circumstances, relevant RVs may be erroneously filtered out, thereby excluding relevant information to the HV. The dynamic target classification herein disclosed accounts for parameters of the RVs, such as speed, acceleration, location, and relative speed, parameters of the HV such as vehicle location, speed, vehicle length, and intended route, and external parameters such as traffic congestion status, speed limit, road geometry, and the like. Because of this, dynamic target zones are generated to match specific scenarios, including generating a target zone with a larger zone length during times of higher velocity travel (e.g., highway or freeway travel), generating a target zone with a smaller zone length or width during times of lower velocity travel (e.g., city travel or during periods of high congestion), and/or generating angled target zones at intersections when making turns, as non-limiting examples.

The dynamic target zones used for dynamic target classification therefore reduce processing demands for the vehicle computing system by reducing the number of messages that are processed by secondary applications compared to target classification based on fixed target zones. As an example, during a period of travel along a highway in rush hour when there is congested traffic and as a result many vehicles present within a V2X threshold distance of the HV, a relatively high volume of messages may be received by the vehicle computing system of the HV. With a fixed target zone with a zone length based on higher velocity travel, an excess amount of the received messages may be sent on for further processing after having been classified as relevant by the target classification algorithm based on the fixed target zone. Comparatively, dynamic target classification and generation of a dynamic target zone may account for the vehicle congestion by reducing a size of a dynamic target zone. Thus, a reduced number of the received messages may be sent on for further processing, reducing demanded processing power and increasing overall efficiency.

As used herein, an element or step recited in the singular and preceded with the word "a" or "an" should be understood as not excluding plural of said elements or steps, unless such exclusion is explicitly stated. Furthermore, references to "one embodiment" of the invention do not exclude the existence of additional embodiments that also incorporate the recited features. Moreover, unless explicitly stated to the contrary, embodiments "that includes," "including," or "having" an element or a plurality of elements having a particular property may include additional such elements not having that property. The terms "including" and "in which" are used as the plain-language equivalents of the respective terms "that includes" and "wherein." Moreover, the terms "first," "second," and "third," etc. are used merely as labels, and are not intended to impose numerical requirements or a particular positional order on their objects.

This written description uses examples to disclose the invention, including the best mode, and also to enable a person of ordinary skill in the relevant art to practice the invention, including making and using any devices or systems and performing any incorporated methods. The patentable scope of the invention is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

## Claims

1. A method for a vehicle computing system of a host vehicle, HV, comprising:

   receiving one or more messages from one or more remote vehicles, RVs via Vehicle-to-Everything, V2X, communication, wherein each of the one or more messages comprise one or more RV parameters;
   determining one or more HV parameters;
   performing target classification based on the one or more HV parameters and the one or more RV parameters of each of the one or more RVs to identify a subset of the one or more messages;
   transmitting the subset of the one or more messages to an application of the vehicle computing system for processing.

2. The method of claim 1, wherein the one or more messages are safety messages .

3. The method of claim 1 or 2, wherein the one or more RV parameters comprise one or more of location, speed, direction of travel, vehicle length, acceleration, yaw rate, and steering wheel angle.

4. The method of any preceding claim, wherein the one or more HV parameters comprise one or more of location, speed, intended route, steering wheel angle, yaw rate, and vehicle length.

5. The method of any preceding claim, wherein performing target classification is further based on one or more environmental parameters, including traffic status and road geometry.

6. The method of any preceding claim, further comprising determining a relative speed between the HV and each of the one or more RVs, and wherein performing target classification is based on the relative speed.

7. The method of claim 6, wherein performing target classification comprises generating a dynamic target zone based on the one or more HV parameters, the one or more RV parameters, and the relative speed.

8. A vehicle computing system of a host vehicle, HV, comprising:

one or more processors; and

a memory coupled to the one or more processors, the memory storing instructions that, when executed by the one or more processors, cause the one or more processors to:

receive one or more messages from one or more remote vehicles, RVs;

determine one or more parameters of the one or more RVs based on data in the one or more messages, wherein the one or more parameters of the one or more RVs comprise at least RV speed and RV direction of travel;

determine one or more conditions of the HV, wherein the one or more conditions of the HV comprise at least HV speed and HV direction of travel;

determine a relative speed between the HV and each of the one or more RVs based on the HV speed, RV speed, RV direction of travel, and HV direction of travel;

classify the one or more messages based on the one or more parameters of the one or more RVs, the one or more conditions of the HV, and the relative speed;

identify a subset of the one or more RVs as relevant targets based on classification; and

transmit the subset of the one or more RVs for further processing by the vehicle computing system.

9. The vehicle computing system of claim 8, further comprising determining a target zone based on the one or more parameters of the one or more RVs, the one or more conditions of the HV, and the relative speed.

10. The vehicle computing system of claim 8 or 9, further comprising determining one or more environmental conditions, including road geometry and traffic status.

11. The vehicle computing system of claim 10, wherein the one or more environmental conditions are determined based on a global positioning system (GPS) associated with the vehicle computing system.

12. The vehicle computing system of any of claims 9 to 11, wherein the target zone is determined by determining a zone length based on the relative speed and a Time-to-Collision (TTC) and determining a future position of the HV based on yaw rate and HV speed.

13. The vehicle computing system of any of claims 8 to 12, wherein the one or more conditions of the HV further include vehicle location, direction of travel, and intended route.

14. The vehicle computing system of any of claims 8 to 13, wherein the one or more parameters of the one or more RVs further include vehicle location and direction of travel.

15. The vehicle computing system of any of claims 8 to 14, wherein the further processing comprises determining one or more notifications to be presented to a driver based on messages corresponding to the subset of the one or more RVs.

FIG. 1

HOST VEHICLE 101

VEHICLE COMPUTING SYSTEM 102

NON-TRANSITORY MEMORY 104

PROCESSOR 106

V2X SYSTEM 108

COMMUNICATION MODULE 110

SMALL CELL 112

TARGET CLASSIFICATION MODULE 114

GPS 116

ACCELEROMETER 120

DISPLAY SCREEN 118

100

130

1st REMOTE VEHICLE 140

VEHICLE COMPUTING SYSTEM 141

V2X COMMUNICATION SYSTEM 146

ACCELEROMETER 150

2nd REMOTE VEHICLE 142

VEHICLE COMPUTING SYSTEM 143

V2X COMMUNICATION SYSTEM 147

Nth REMOTE VEHICLE 144

VEHICLE COMPUTING SYSTEM 145

V2X COMMUNICATION SYSTEM 148

160

FIG. 2

FIG. 3

400

402

404

| BASIC SAFETY MESSAGE | 406 |

406

408

| VEHICLE LOCATION INFORMATION |
| EXTENSION  INFORMATION | 410 |
| VEHICLE SPEED INFORMATION | 412 |

# FIG. 4

500

START

502

Receive one or more messages from one or more RVs within V2X range of the HV

504

Determine one or more vehicle conditions of the HV based on one or more HV parameters

506

Process the one or more messages to determine one or more RV parameters

508

Perform target classification based on the one or more parameters and the one or more vehicle conditions of the HV

510

Filter out a first subset of the one or more messages based on the target classification

512

Transmit a remaining second subset of the one or more BSMs to a dedicated application for further processing

END

FIG. 5

FIG. 6

START

702

Determine relative speed between HV and an RV

704

Determine zone length based on relative speed and TTC

706

Generate region of interest based on zone length

708

HV turning? → 716

Generate target zone based on region of interest

END

710

Predict future position of HV

712

RV heading toward the future position? → 718

Generate target zone based on region of interest

END

714

Generate target zone based on future position

END

700

FIG. 7

FIG. 8

PRIOR ART

FIG. 9

EP 4 629 600 A1

FIG. 10

EP 4 629 600 A1

FIG. 11A

FIG. 11B

EP 4 629 600 A1

Europäisches
Patentamt

European
Patent Office

Office européen
des brevets

## EUROPEAN SEARCH REPORT

**Application Number**

EP 25 15 9876

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/271151 A1 (HARMAN INT IND [US]) 29 December 2022 (2022-12-29) * paragraph [0004] - paragraph [0005] * * paragraph [0029] - paragraph [0053]; figures 1-5 * * paragraph [0056] - paragraph [0082]; figures 3A,3B,6-9 * * paragraph [0086] - paragraph [0092]; figures 10B-10H * | 1-15 | INV. H04L67/12 G08G1/16 H04W4/46 |
| X | US 2021/266867 A1 (DAS SOUMYA [US] ET AL) 26 August 2021 (2021-08-26) * paragraph [0002] - paragraph [0006] * * paragraph [0019] - paragraph [0033]; figures 1-3 * * paragraph [0038] - paragraph [0064]; figures 4-8 * * paragraph [0067] - paragraph [0092]; figures 8-10 * | 1-15 | |
| X | US 2019/271989 A1 (GUO JIANLIN [US] ET AL) 5 September 2019 (2019-09-05) * paragraph [0009] - paragraph [0015] * * paragraph [0029] - paragraph [0039]; figures 1-3 * * paragraph [0045] - paragraph [0070]; figures 7-10 * | 1-15 | TECHNICAL FIELDS SEARCHED (IPC) H04L G08G H04W |

The present search report has been drawn up for all claims

| Place of search | Date of completion of the search | Examiner |
|---|---|---|
| The Hague | 6 August 2025 | Gavriliu, Bogdan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 9876

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2025

| Patent document cited in search report | | Publication date | Patent family member(s) | | Publication date |
|---|---|---|---|---|---|
| WO 2022271151 | A1 | 29-12-2022 | CN | 117957592 A | 30-04-2024 |
| | | | EP | 4360076 A1 | 01-05-2024 |
| | | | US | 2024265809 A1 | 08-08-2024 |
| | | | WO | 2022271151 A1 | 29-12-2022 |
| US 2021266867 | A1 | 26-08-2021 | CN | 115104327 A | 23-09-2022 |
| | | | EP | 4107977 A1 | 28-12-2022 |
| | | | TW | 202139736 A | 16-10-2021 |
| | | | US | 2021266867 A1 | 26-08-2021 |
| | | | WO | 2021168046 A1 | 26-08-2021 |
| US 2019271989 | A1 | 05-09-2019 | CN | 111788851 A | 16-10-2020 |
| | | | EP | 3763155 A1 | 13-01-2021 |
| | | | JP | 6972356 B2 | 24-11-2021 |
| | | | JP | 2021510198 A | 15-04-2021 |
| | | | US | 2019271989 A1 | 05-09-2019 |
| | | | WO | 2019171629 A1 | 12-09-2019 |

EPO FORM P0459

For more details about this annex : see Official Journal of the European Patent Office, No. 12/82